Europäisches Patentamt

European Patent Office

Office européen des brevets

(11) Publication number: **0 373 351**
**A1**

## (12) EUROPEAN PATENT APPLICATION

(21) Application number: **89120544.5**

(22) Date of filing: **07.11.89**

(51) Int. Cl.⁵: **B01D 53/34**

(30) Priority: **15.11.88 IT 2262188**

(43) Date of publication of application:
**20.06.90 Bulletin 90/25**

(84) Designated Contracting States:
**AT BE CH DE ES FR GB GR LI LU NL SE**

(71) Applicant: **ENTE NAZIONALE PER L'ENERGIA ELETTRICA - (ENEL)**
**Via G.B. Martini 3**
**I-00198 Roma(IT)**

(72) Inventor: **De Michele, Gennaro**
**3, Via G.B. Martini**
**I-00198 Roma(IT)**
Inventor: **Quattroni, Giuseppe**
**3, Via G.B. Martini**
**I-00198 Roma(IT)**

(74) Representative: **Ferraiolo, Ruggero et al**
**FERRAIOLO RUGGERO & CO. s.n.c. Via Napo Torriani, 10**
**I-20124 Milano(IT)**

(54) **A mixture for reducing pollutant materials in boiler flue gases.**

(57) A mixture of urea, hydrate lime and water for reducing pollutant materials in the flue gases. Urea reduces the nitric oxides and hydrate lime reduces the sulphur anhydrides; the mixture improves the overhall efficiency in the reduction of pollutant materials and moreover enhances the efficiency of the electrostatic precipitators located downstream in the combustion plant. This mixture is an aqueous mixture of urea and hydrate lime (and optionally of a dispersing additive) intended to be injected in the boiler combustion chamber.

EP 0 373 351 A1

## "A mixture for reducing pollutant materials in boiler flue gases"

This present invention relates to a mixture of urea, hydrate lime and water for reducing pollutant materials in the flue gases in a boiler; in particular, it relates to a mixture whose main scope is to reduce the quantity of the nitric oxides and sulphur anhydrides in the gases produced by the combustion, particularly by the combustion of fuel oils.

It is known that a reduction of the nitric oxides is achieved by injecting into a boiler an urea solution; that a reduction of sulphur anhydrides is achieved by injecting into a boiler powdered hydrate lime. Moreover, lowering powder emission is achieved by means of electrostatic precipitators located downstream in the combustion plant. The duty of such precipitators is to retain possible powders produced as a direct consequence of the combustion and powdery materials (for instance, calcium oxides and sulfates) produced by the reaction of the sulphur anhydrides with calcium containing materials supplied into the combustion chamber.

A reducing effect of well known rate is achieved by supplying into the combustion chamber urea solutions and powdered hydrate lime solutions in the presence of electrostatic precipitators.

An object of this present invention is to achieve improved reduction of pollutant materials in boiler flue gases.

Advantages of the invention are the saving in urea and hydrate lime for achieving same reducing effect as well as the enhancing of the efficiency of said precipitators in their standard operation conditions.

The invention is a mixture of urea ($CH_4N_2O$), hydrate lime [$Ca(OH)_2$] and water. The mixture may contain a dispersing additive in case the hydrate lime weight is higher than 35% of the weight of the mixture of hydrate lime, urea and water. The additive is calcium and/or sodium ligninsulfonate and polysaccharides and enhances the dispersion of hydrate lime in the concentrated mixture.

The mixture composition will be substantially:

a) Hydrate lime: 1 to 60% of hydrate lime-water dispersion weight,

b) Water: according to percentages as given under item a),

c) Urea: 1 to 70% of hydrate lime weight,

d) Additive: 1 to 4% of hydrate lime weight in a hydrate lime-water dispersion containing hydrate lime over 35% in weight.

The mixture of water, powered hydrate lime, granular urea and, if necessary, powdered additive is made in a mixer and is injected in a combustion chamber.

While using said mixture, the lowering of nitric oxides, sulphur anhydrides and powdery materials quantity was measured in the flue gases at the chimney outlet. From an industrial point of view, such a lowering is notably stronger than the one achieved by using separately and simultaneously equal quantities of powdered urea and powdered hydrate lime and in the presence of same elecrostatic precipitator.

## Claims

1. A mixture for reducing pollutant materials in the boiler flue gases wherein at least an electrostatic precipitator is located for reducing the quantity of the powders characterised in that it comprises powdered urea, powdered hydrate lime and water for reducing nitric oxides, sulphur anhydrides and powder emission.

2. A mixture according to claim 1 characterised in that it comprises hydrate lime from 1 to 60% of hydrate lime-water mixture weight and urea from 1 to 70% of hydrate lime weight.

3. A mixture according to claim 1 wherein the hydrate lime-water dispersion weight is at least 35% of total dispersion weight characterised in that a hydrate lime dispersing additive is comprised.

4. A mixture according to claim 3 characterised in that said additive comprises sodium ligninsulfonate and polysaccharides totalling from 1 to 4% of hydrate lime weight.

5. A mixture according to claim 3 characterised in that said additive comprises calcium, sodium ligninsulfonate and polysaccharides totalling from 1 to 4% of hydrate lime weight.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0271994 (UNITED STATES ENVIRONMENTAL PROTECTION AGENCY)<br>* claims 1, 7 * | 1, 5 | B01D53/34 |
| A | DE-A-2752918 (SAARBERGWERKE AG)<br>* the whole document * | 1, 2 | |
| A | US-A-3565575 (A.WARSHAW)<br>* claim 1 * | 1 | |

TECHNICAL FIELDS SEARCHED (Int. Cl.5 )

B01D

The present search report has been drawn up for all claims

| Place of search | Date of completion of the search | Examiner |
|---|---|---|
| BERLIN | 07 MARCH 1990 | BERTRAM H.E.H. |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
................................................................
& : member of the same patent family, corresponding
     document

EPO FORM 1503 03.82 (P0401)